# EUROPÄISCHE PATENTANMELDUNG

(11) **EP 2 457 806 A1**
(43) Veröffentlichungstag der Anmeldung: **30.05.2012**
(21) Anmeldenummer: 11008492.8
(22) Anmeldetag: 22.10.2011
(51) Int. Cl.: B62D 5/00, B62D 3/12

(54) **Lenkeinrichtung**

(30) Priorität: 25.11.2010 DE 102010052546
(71) Anmelder: Audi AG, 85045 Ingolstadt (DE)
(72) Erfinder: Kunsch, Peter, 85123 Karlskron (DE); Schmid, Wolfgang, 85354 Freising (DE)
(74) Vertreter: Asch, Konrad

(57) **Zusammenfassung**

Die Erfindung betrifft eine Lenkeinrichtung (1) für ein mit Rädern (2, 3) versehenes Fahrzeug, aufweisend: einen Lenker (10) zum Erzeugen einer einen bestimmten Bewegungsverlauf und ein bestimmtes Betätigungsausmaß aufweisenden Lenkbetätigung, eine Wandlereinrichtung (20), die eingerichtet ist, die über einen Eingang (20a) dieser zugeführte Lenkbetätigung zu wandeln, so dass diese gewandelt an einem mit den Rädern in Verbindung zu bringenden Ausgang (20b, 20c) der Wandlereinrichtung abgreifbar ist, eine Verbindungsvorrichtung (30), die den Lenker mit dem Eingang der Wandlereinrichtung verbindet, und an der Verbindungsvorrichtung angeordnete Begrenzungsmittel (40), die eingerichtet sind, das Betätigungsausmaß selektiv entweder auf ein erstes Maximalbetätigungsausmaß freizugeben oder auf ein reduziertes zweites Maximalbetätigungsausmaß zu begrenzen.

## Beschreibung

Die Erfindung betrifft eine Lenkeinrichtung gemäß dem Oberbegriff des Anspruchs 1.

Eine Lenkeinrichtung der eingangsgenannten Art ist aus EP 1 182 115 B1 bekannt. Wie dort erwähnt, werden im heutigen Stand der Technik Radräume bei z.B. frontangetriebenen Fahrzeugen derart ausgelegt, dass bei Verwendung von Schneeketten der Freigang mit Schleuderkontur gewährleistet ist. Speziell im Vorderachsbereich eines Kraftfahrzeugs, insbesondere eines Personenkraftwagens, ist auf Grund der großen Lenkwinkel viel Bauraum von Nöten, der nur für den speziellen Fall der Schneekettenbenutzung vorgehalten wird. Berührungspunkte zu anderen Bauteilen sind unter anderem der Fahrzeuglängsträger, der in diesem Bereich auf Grund der Schleuderkontur der Schneekette relativ stark ausgeklinkt ist.

Um diesen Bauraum einerseits für einen größeren Radeinschlag bzw. kleineren Wendekreis beim Lenken zu nutzen und dennoch bei Schneekettenbenutzung eine Kollision der Schneeketten mit angrenzenden Fahrzeugteilen zu vermeiden, weist die in EP 1 182 115 B1 beschriebene Lenkeinrichtung verstellbare Begrenzungsmittel auf.

Diese Begrenzungsmittel sind in ein Lenkgetriebe (eine Wandlereinrichtung) der Lenkeinrichtung integriert und sind eingerichtet, das Betätigungsausmaß des Lenkrades selektiv entweder auf ein erstes Maximalbetätigungsausmaß freizugeben (wenn keine Schneeketten benutzt werden) oder auf ein gegenüber dem ersten Maximalbetätigungsausmaß reduziertes zweites Maximalbetätigungsausmaß (bei Schneekettenbenutzung) zu begrenzen.

Genauer gesagt erfolgt die Begrenzung des Betätigungsausmaßes bzw. Lenkwinkels bei diesen Begrenzungsmitteln durch zwei mechanische Begrenzungselemente an einer Zahnstange des Lenkgetriebes, die über zwei Elektromotoren über ein Getriebe betätigt werden.

Neben der Verbesserung des Lenkverhaltens kann dadurch z.B. die Längsträgerstruktur ohne Ausklinkung gestaltet werden, was Vorteile bei der Steifigkeit bezüglich eines Crashverhaltens hat und eine Gewichtseinsparung nach sich zieht.

Mögliche Problemstellen der in EP 1 182 115 B1 beschriebenen Lenkeinrichtung können jedoch sein, dass die mechanische Begrenzung der Zahnstange über zwei elektromechanische Steller teuer und schwer ist, da diese in doppelter Ausführung (für die rechte und die linke Seite) vorhanden sein müssen und in direktem Kontakt mit Schmutz und Wasser stehen können. Weiterhin kann der Bauraum in diesem Bereich sehr eng sein, was den Konstruktionsaufwand erhöhen kann.

Der Erfindung liegt die Aufgabe zugrunde, eine Lenkeinrichtung gemäß dem Oberbegriff des Anspruchs 1 bereitzustellen, deren Begrenzungsmittel besser gegen Umwelteinflüsse geschützt sind.

Diese Aufgabe wird durch die kennzeichnenden Merkmale des Anspruches 1 in Verbindung mit seinen Oberbegriffsmerkmalen gelöst.

Die Unteransprüche bilden vorteilhafte Weiterbildungen der Erfindung.

Gemäß der Erfindung weist eine Lenkeinrichtung für ein mit Rädern versehenes Fahrzeug, insbesondere einen Personenkraftwagen, auf: einen Lenker zum Erzeugen einer einen bestimmten Bewegungsverlauf und ein bestimmtes Betätigungsausmaß aufweisenden Lenkbetätigung; eine Wandlereinrichtung, die eingerichtet ist, die über einen Eingang dieser zugeführte Lenkbetätigung zu wandeln, so dass die Lenkbetätigung in gewandelter Form, wie z.B. bevorzugt mit einem anderen Bewegungsverlauf, an einem mit den Rädern in Lenkantriebsverbindung zu bringenden Ausgang der Wandlereinrichtung abgreifbar ist; eine Verbindungsvorrichtung, die den Lenker mit dem Eingang der Wandlereinrichtung lenkantriebsverbindet, zum Überführen der Lenkbetätigung in die Wandlereinrichtung; und Begrenzungsmittel, die eingerichtet sind, das Betätigungsausmaß selektiv entweder auf ein von Null abweichendes erstes Maximalbetätigungsausmaß freizugeben oder auf ein gegenüber dem ersten Maximalbetätigungsausmaß reduziertes von Null abweichendes zweites Maximalbetätigungsausmaß zu begrenzen. Die erfindungsgemäße Lenkeinrichtung zeichnet sich dadurch aus, dass die Begrenzungsmittel an der Verbindungsvorrichtung angeordnet sind. Bevorzugt sind die Begrenzungsmittel in die Verbindungsvorrichtung integriert, und noch bevorzugter ausschließlich in diese integriert.

Durch die Anordnung bzw. Integration der Begrenzungsmittel an der bzw. in die zwangsläufig näher zum Lenker und damit weiter weg von den Rädern und schmutzbelasteten Bereichen gelegene Verbindungsvorrichtung sind die Begrenzungsmittel besser gegen Umwelteinflüsse geschützt.

Unter einem von Null abweichenden Maximalbetätigungsausmaß wird erfindungsgemäß verstanden, dass der Lenker tatsächlich auf einen maximalen Lenkeinschlag bewegt wird und nicht z.B. durch ein Lenkerschloss gegen Betätigung gesperrt ist.

Der Lenker ist bevorzugt von einem Lenkrad gebildet, wie es in üblichen Kraftfahrzeugen, insbesondere Personenkraftwagen, vorgesehen ist. Andere Formen eines Lenkers sind natürlich auch denkbar, wie z.B. eine motorradähnliche Lenkstange. Bei diesen Formen von Lenkern weist die Lenkbetätigung einen rotativen Bewegungsverlauf auf.

Natürlich sind gemäß der Erfindung auch Formen von Lenkern denkbar, bei denen die Lenkbetätigung einen linearen Bewegungsverlauf aufweist.

Die Wandlereinrichtung ist bevorzugt eingerichtet, einen rotativen Bewegungsverlauf einer Lenkbetätigung in einen linearen Bewegungsverlauf dieser oder alternativ einen linearen Bewegungsverlauf einer Lenkbetätigung in einen rotativen Bewegungsverlauf dieser zu wandeln.

Besonders bevorzugt ist die Wandlereinrichtung eingerichtet, einen rotativen Bewegungsverlauf einer Lenkbetätigung in einen linearen Bewegungsverlauf dieser zu wandeln und ist von einem üblichen Lenkgetriebe gebildet, wie es in üblichen Kraftfahrzeugen, insbesondere Personenkraftwagen, vorgesehen ist.

Alternativ könnte die Wandlereinrichtung auch eingerichtet sein, einen rotativen Bewegungsverlauf einer Lenkbetätigung in ein elektrisches Signal umzuwandeln, welches am Ausgang der Wandlereinrichtung z.B. von elektrischen Stellgliedern an den Rädern für eine Lenkbewegung abgreifbar ist.

Gemäß einer Ausführungsform der Erfindung weisen die Begrenzungsmittel ein einziges zum Erzielen der Begrenzung/Freigabe zu stellendes Begrenzungselement auf, das selektiv entweder in eine Freigabeposition, in der die Begrenzungsmittel das erste Maximalbetätigungsausmaß realisieren, oder in eine Begrenzungsposition stellbar ist, in der die Begrenzungsmittel das zweite Maximalbetätigungsausmaß realisieren.

Gemäß einer weiteren Ausführungsform der Erfindung weisen die Begrenzungsmittel ein einziges Stellglied auf, das mit dem Begrenzungselement antriebsverbunden ist, so dass durch Ansteuern des Stellgliedes das Begrenzungselement selektiv zwischen der Freigabeposition und der Begrenzungsposition verfahrbar ist.

Dadurch, dass nur ein einziges Begrenzungselement und ein einziges Stellglied vorgesehen sind, ist die Lenkeinrichtung insgesamt einfacher und leichter aufgebaut und somit u.a. preiswerter herstellbar.

Gemäß noch einer weiteren Ausführungsform der Erfindung ist der Lenker eingerichtet, die Lenkbetätigung mit einem rotativen Bewegungsverlauf zu erzeugen, wobei das Begrenzungselement eingerichtet ist, eine durch die Lenkbetätigung erzeugte Rotationsbewegung in der Freigabeposition freizugeben und in der Begrenzungsposition zu begrenzen.

Diese Ausgestaltung der Erfindung weist insbesondere Vorteile auf, wenn die Erfindung z.B. in einem lenkradgelenkten Kraftfahrzeug, wie einem Personenkraftwagen, verwendet wird. Durch die Begrenzung der Rotationsbewegung wird die möglichst nahe Anordnung der Begrenzungsmittel am Lenker und damit im vor Umwelteinflüssen geschützten Fahrgastraum vorteilhaft und insbesondere auch platzsparend unterstützt.

Gemäß noch einer Ausführungsform der Erfindung ist eine weitere Wandlereinrichtung vorgesehen, die in die Begrenzungsmittel integriert ist und die eingerichtet ist, das zweite Maximalbetätigungsausmaß in weniger als 360 Grad (Winkelgrad) Rotation umzusetzen.

Von den Erfindern wurde ermittelt, dass heutige Lenkungen typischerweise 2,7 Umdrehungen von Endanschlag zu Endanschlag aufweisen. Auf dieser Basis haben die Erfinder erkannt, dass, wenn diese fast 1000 Grad (Winkelgrad) des Lenkers in weniger als eine Umdrehung (360 Grad) in den Begrenzungsmitteln gewandelt werden würden, vorteilhaft nur ein einziges Begrenzungselement und ein einziges Stellglied vorgesehen werden brauchen.

Gemäß einer Ausführungsform der Erfindung ist das Begrenzungselement eingerichtet, translatorisch zwischen der Freigabeposition und der Begrenzungsposition verfahren zu werden.

Eine translatorische Verfahrbewegung lässt sich technisch sehr leicht realisieren, wie z.B. durch eine Linearführung des Begrenzungselements in Verbindung mit einem Solenoid als Stellglied. Außerdem "schmiegt" sich ein so verfahrbares Begrenzungselement vorteilhaft platzsparend an eine eine rotative Lenkbetätigung übertragende Verbindungsvorrichtung an.

In diesem Sinne weist gemäß noch einer weiteren Ausführungsform der Erfindung die Verbindungsvorrichtung eine Lenksäule mit einer Längsachse auf, wobei das Begrenzungselement eingerichtet ist, parallel zur Längsachse der Lenksäule zwischen der Freigabeposition und der Begrenzungsposition verfahren zu werden.

Alternativ könnte das Begrenzungselement auch eingerichtet sein, senkrecht zur Längsachse der Lenksäule (d.h. radial in Bezug zur Lenksäule) zwischen der Freigabeposition und der Begrenzungsposition verfahren zu werden.

Gemäß einer weiteren Ausführungsform der Erfindung weist die Verbindungsvorrichtung eine Lenkwelle auf, die eingerichtet ist, die Lenkbetätigung durch Rotation zu übertragen, wobei die Begrenzungsmittel ein erstes Rotationsübertragungselement, das drehfest auf der Lenkwelle angeordnet ist (z.B. angeformt oder darauf befestigt), und ein zweites Rotationsübertragungselement aufweist, das drehbar gelagert und z.B. an einem stationären Element, wie z.B. einem Träger der Lenksäule, abgestützt ist und das mit dem ersten Rotationsübertragungselement in Drehantriebsverbindung steht, wobei die beiden Rotationsübertragungselemente ein Rotationsübersetzungsverhältnis realisieren, so dass das zweite Maximalbetätigungsausmaß in weniger als 360 Grad (Winkelgrad) Rotation des zweiten Rotationsübertragungselements umgesetzt wird.

Mit anderen Worten bilden die beiden Rotationsübertragungselemente in vorteilhaft einfacher und platzsparender Ausgestaltung die weitere Wandlereinrichtung, die eingerichtet ist, das zweite Maximalbetätigungsausmaß in weniger als 360 Grad Rotation umzusetzen.

Gemäß noch einer Ausführungsform der Erfindung weist das zweite Rotationsübertragungselement einen Anschlag auf, der so angeordnet ist, dass die Rotation des zweiten Rotationsübertragungselements durch das Begrenzungselement in dessen Begrenzungsposition auf weniger als 360 Grad (Winkelgrad) begrenzt ist und in dessen Freigabeposition freigegeben ist.

Der Anschlag kann an das zweite Rotationsübertragungselement angeformt oder daran angebracht sein. Durch eine Vergrößerung oder Verkleinerung einer umfänglichen Breite (d.h. in Rotationsrichtung des zweiten Rotationsübertragungselements) des Anschlags kann das zweite Maximalbetätigungsausmaß verkleinert bzw. vergrößert und damit optimal angepasst werden.

Gemäß einer weiteren Ausführungsform der Erfindung ist das erste Rotationsübertragungselement als Zahnrad mit außenumfänglich der Lenkwelle angeordneter Zahnung ausgebildet, wobei das zweite Rotationsübertragungselement als Hohlzahnrad mit an einem Innenumfang dessen angeordneter Zahnung ausgebildet ist und mit dem ersten Rotationsübertragungselement in Zahneingriff steht, wobei sich die Lenkwelle durch das Hohlzahnrad hindurch erstreckt.

Diese Ausgestaltung der Erfindung unterstützt in besonders vorteilhafter Weise die platzsparende Ausführung der Begrenzungsmittel.

Gemäß noch einer weiteren Ausführungsform der Erfindung ist der Anschlag am Innenumfang des Hohlzahnrads angeordnet, wobei das Begrenzungselement radial innerhalb eines von dem Innenumfang des Hohlzahnrads umschriebenen Kreises angeordnet ist.

Auch diese Ausgestaltung der Erfindung unterstützt in besonders vorteilhafter Weise die noch platzsparendere Ausführung der Begrenzungsmittel.

Alternativ könnte der Anschlag auch an einem Außenumfang des Hohlzahnrads angeordnet sein, wobei das Begrenzungselement außerhalb des von dem Innenumfang des Hohlzahnrads umschriebenen Kreises angeordnet ist. In diesem Fall kann das Begrenzungselement eingerichtet sein, parallel zur Längsachse der Lenksäule zwischen der Freigabeposition und der Begrenzungsposition verfahren zu werden, oder kann alternativ dazu eingerichtet sein, senkrecht zur Längsachse der Lenksäule (d.h. radial in Bezug zur Lenksäule) zwischen der Freigabeposition und der Begrenzungsposition verfahren zu werden.

Im Fazit weist gemäß ihren Ausführungsformen die Erfindung u.a. folgende Vorteile auf:
- Es sind nur ein einziges Begrenzungselement (z.B. ein Sperrstift, der in einer begrenzenden Kulisse geführt wird und dort einen Anschlag hat) und ein einziges Stellglied notwendig.
- Die Begrenzungsmittel sind kleiner, leichter und kostengünstiger.
- Die Begrenzungsmittel stehen nicht in direktem Kontakt mit Schmutz und Wasser, da sie in den Lenkstockhebel integrierbar sind.
- Durch Verwendung eines einzigen Stellgliedes und Begrenzungselements ist die Ausfallwahrscheinlichkeit des Systems geringer.

Die Erfindung erstreckt sich ausdrücklich auch auf solche Ausführungsformen, welche nicht durch Merkmalskombinationen aus expliziten Rückbezügen der Ansprüche gegeben sind, womit die offenbarten Merkmale der Erfindung - soweit dies technisch sinnvoll ist - beliebig miteinander kombiniert sein können.

Weitere Vorteile, Merkmale und Anwendungsmöglichkeiten der vorliegenden Erfindung ergeben sich aus der nachfolgenden Beschreibung in Verbindung mit dem bzw. den in der Zeichnung dargestellten Ausführungsbeispiel(en).

In der Beschreibung, in den Ansprüchen und in der Zeichnung werden die in der unten aufgeführten Liste der Bezugszeichen verwendeten Begriffe und zugeordneten Bezugszeichen verwendet.

In der Zeichnung bedeutet:
- Fig. 1: Eine schematisch dargestellte Lenkeinrichtung gemäß einer Ausführungsform der Erfindung;
- Fig. 2: eine Querschnittsansicht einer Lenksäule der Lenkeinrichtung von Fig. 1, und
- Fig. 3: eine Längsschnittansicht der Lenksäule der Lenkeinrichtung von Fig. 1.

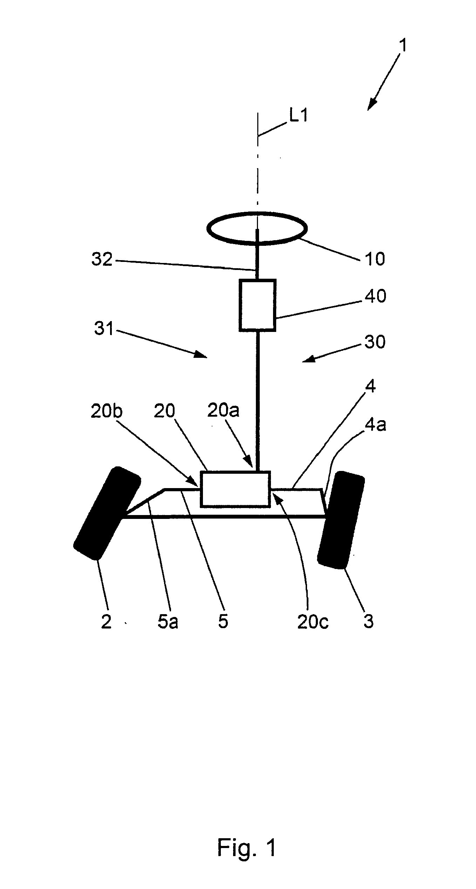

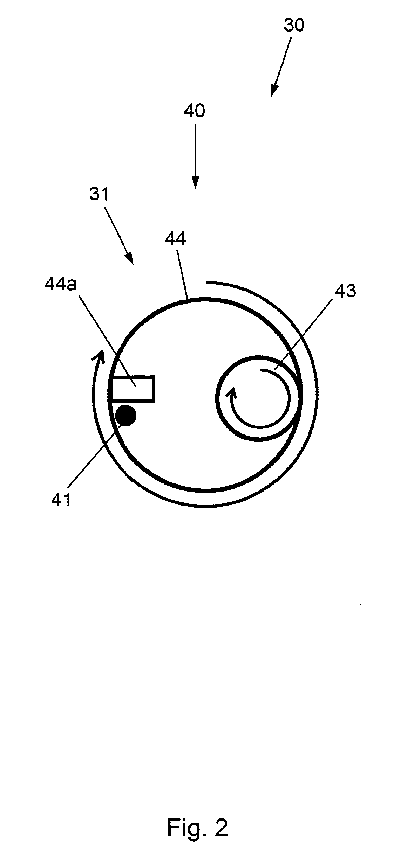

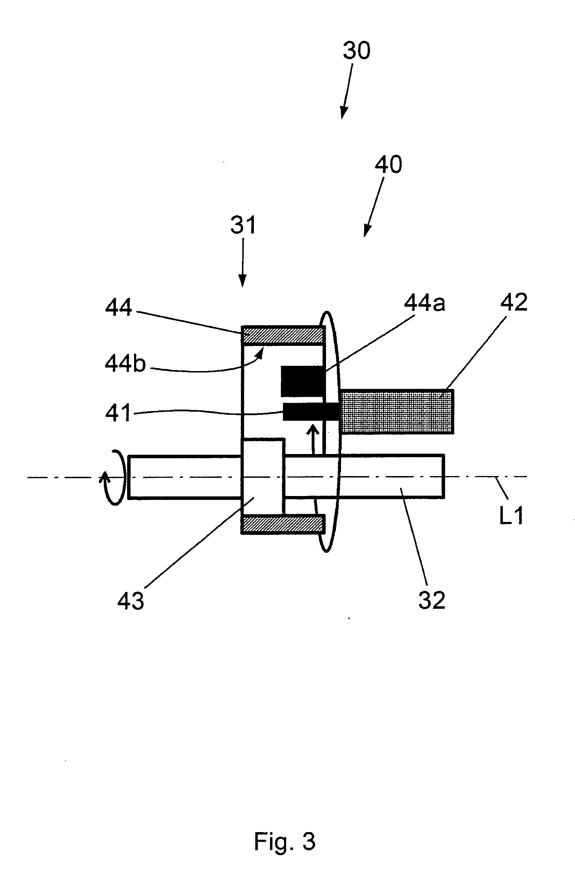

Im Folgenden wird unter Bezugnahme auf die Figuren 1 bis 3 eine Lenkeinrichtung 1 für ein mit Rädern 2, 3 versehenes Fahrzeug gemäß einer Ausführungsform der Erfindung beschrieben. Die Lenkeinrichtung 1 ist bevorzugt in einen mit vier Rädern 2, 3 versehenen frontgelenkten Personenkraftwagen (nicht vollständig gezeigt) integriert.

Wie in Fig. 1 bis Fig. 3 gezeigt, weist die Lenkeinrichtung 1 einen in Form eines Lenkrades ausgebildeten Lenker 10, eine in Form eines Lenkgetriebes ausgebildete erste Wandlereinrichtung 20, eine Verbindungsvorrichtung 30 und Begrenzungsmittel 40 auf.

Der Lenker 10 dient zum Erzeugen einer einen rotativen Bewegungsverlauf und ein bestimmtes Betätigungsausmaß (hier eine bestimmte Winkelgradzahl einer Drehbetätigung des Lenkers) aufweisenden Lenkbetätigung durch einen Fahrer des Fahrzeugs.

Die Wandlereinrichtung 20 ist über eine darin integrierte Zahnstangen-Zahnrad-Verbindung (nicht gezeigt) eingerichtet, die über einen Eingang 20a dieser zugeführte Lenkbetätigung zu wandeln, so dass die Lenkbetätigung mit linearem Bewegungsverlauf an einem mit den Rädern in Lenkantriebsverbindung zu bringenden Ausgang 20b, 20c der Wandlereinrichtung 20 abgreifbar ist.

Bei der gezeigten Ausführungsform der Erfindung ist die Zahnstange der Zahnstangen-Zahnrad-Verbindung der Wandlereinrichtung 20 als Ausgang 20b, 20c beidseitig mit jeweils einer Spurstange 4, 5 eines Lenkgestänges des Fahrzeugs verbunden. Die beiden Spurstangen 4, 5 sind wiederum jeweils über einen Lenkhebel 4a, 5a des Lenkgestänges mit einen Achsschenkel bzw. Radträger (nicht als Einzelheit gezeigt) des jeweils zugehörigen gelenkten Rades 2, 3 (Vorderrad) verbunden.

Die Verbindungsvorrichtung 30 lenkantriebsverbindet den Lenker 10 mit dem Eingang 20a der Wandlereinrichtung 20, so dass die rotative Lenkbetätigung in die Wandlereinrichtung 20 überführbar ist.

Die Verbindungsvorrichtung 30 weist eine Lenksäule 31 auf, in die eine drehbar gelagerte und mit dem Lenker 10 drehantriebsverbundene Lenkwelle 32 mit einer Längsachse L1 integriert ist. Damit ist die Verbindungsvorrichtung 30 eingerichtet, die Lenkbetätigung durch Rotation der Lenkwelle 32 zu übertragen.

Die Begrenzungsmittel 40 sind an der Verbindungsvorrichtung 30 angeordnet und gemäß dieser Ausführungsform in diese integriert und sind eingerichtet, das Betätigungsausmaß der rotativen Lenkbetätigung selektiv entweder auf ein erstes Maximalbetätigungsausmaß (wenn keine Schneeketten benutzt werden) freizugeben oder auf ein gegenüber dem ersten Maximalbetätigungsausmaß reduziertes zweites Maximalbetätigungsausmaß (bei Schneekettenbenutzung) zu begrenzen.

Die Begrenzungsmittel 40 weisen ein einziges zu stellendes Begrenzungselement 41 in Form eines linear verfahrbar gelagerten Sperrstiftes sowie ein einziges Stellglied 42 in Form eines eine Linearstellbewegung realisierenden Solenoids oder Elektromagneten auf, wobei das Stellglied 42 mit dem Begrenzungselement 41 antriebsverbunden.

Das Begrenzungselement 41 ist durch elektrisches Ansteuern des Stellgliedes 42 (z.B. mittels eines im Fahrgastraum installierten elektrischen Schalters) selektiv zwischen einer Freigabeposition (in den Figuren nicht gezeigt), in der das Begrenzungselement 41 vollständig in das Stellglied 42 eingefahren ist und dadurch das erste Maximalbetätigungsausmaß freigibt, und einer Begrenzungsposition (wie in den Figuren dargestellt) verfahrbar, in der das Begrenzungselement 41 aus dem Stellglied 42 ausgefahren ist und dadurch das Betätigungsausmaß auf das geringere zweite Maximalbetätigungsausmaß begrenzt. Mit anderen Worten ist das Begrenzungselement 41 eingerichtet, translatorisch und parallel zur Längsachse L1 der Lenkwelle 32 der Lenksäule 31 zwischen der Freigabeposition und der Begrenzungsposition verfahren zu werden.

Wie eingangs erwähnt, könnte gemäß einer in den Figuren nicht dargestellten Variante das Begrenzungselement 41 alternativ eingerichtet sein, translatorisch und senkrecht zur Längsachse L1 der Lenkwelle 32 der Lenksäule 31 zwischen der Freigabeposition und der Begrenzungsposition verfahren zu werden.

Die Begrenzungsmittel 40 weisen ferner ein erstes Rotationsübertragungselement 43, das drehfest auf der Lenkwelle 32 befestigt ist, und ein zweites Rotationsübertragungselement 44 auf, das drehbar gelagert und an einem stationären Element, wie z.B. einem nicht dargestellten Träger der Lenksäule 31, abgestützt ist und das mit dem ersten Rotationsübertragungselement 43 in Drehantriebsverbindung steht.

Die beiden Rotationsübertragungselemente 43, 44 realisieren ein Rotationsübersetzungsverhältnis, so dass das zweite Maximalbetätigungsausmaß in weniger als 360 Grad Rotation des zweiten Rotationsübertragungselements 44 umgesetzt wird.

Von den Erfindern wurde ermittelt, dass heutige Lenkungen typischerweise 2,7 Umdrehungen (972 Grad) von Endanschlag zu Endanschlag aufweisen. Auf dieser Basis haben die Erfinder erkannt, dass, wenn diese 972 Grad (Winkelgrad) des Lenkers 10 in weniger als eine Umdrehung (360 Grad) in den Begrenzungsmitteln 40 gewandelt werden würden, vorteilhaft nur ein einziges Begrenzungselement 41 und ein einziges Stellglied 42 vorgesehen werden brauchen.

Im Fazit bilden die beiden Rotationsübertragungselemente 43, 44 eine zweite Wandlereinrichtung, die eingerichtet ist, das zweite Maximalbetätigungsausmaß in weniger als 360 Grad Rotation in den Begrenzungsmitteln 40 umzusetzen.

Das zweite Rotationsübertragungselement 44 weist einen daran angeformten einen Anschlag 44a auf, der so angeordnet ist, dass die Rotation des zweiten Rotationsübertragungselements 44 durch das Begrenzungselement 41 in dessen Begrenzungsposition auf weniger als 360 Grad begrenzt ist und in dessen Freigabeposition freigegeben ist.

Damit ist das Begrenzungselement 41 eingerichtet, eine durch die Lenkbetätigung erzeugte Rotationsbewegung des zweiten Rotationsübertragungselements 44 in der Freigabeposition freizugeben und in der Begrenzungsposition zu begrenzen.

Mit anderen Worten stößt, wenn sich das Begrenzungselement 41 in der ausgefahrenen Begrenzungsposition (wie in den Figuren dargestellt) befindet, beim Einlenken der Räder 2, 3 der Anschlag 44a an das Begrenzungselement 41 an, wodurch ein weiteres Einlenken bzw. ein größeres Betätigungsausmaß verhindert wird und damit das reduzierte zweite Maximalbetätigungsausmaß der Lenkbetätigung des Lenkers 10 realisiert wird.

Ist andererseits das Begrenzungselement 41 in der eingefahrenen Freigabeposition, so kann sich das zweite Rotationsübertragungselement 44 ungehindert auch über 360 Grad hinaus drehen, womit der das erste Maximalbetätigungsausmaß der Lenkbetätigung des Lenkers 10 definierende Endanschlag nicht durch die Begrenzungsmittel 40, sondern hier z.B. durch die erste Wandlereinrichtung 20 (Lenkgetriebe) realisiert wird.

Das erste Rotationsübertragungselement 43 ist als Zahnrad mit außenumfänglich der Lenkwelle 32 angeordneter Zahnung (nicht im Detail dargestellt) ausgebildet. Das zweite Rotationsübertragungselement 44 ist als Hohlzahnrad mit an einem Innenumfang 44b dessen angeordneter Zahnung (nicht im Detail dargestellt) ausgebildet und steht mit dem ersten Rotationsübertragungselement 43 in rotationsübertragendem Zahneingriff, wobei sich die Lenkwelle 32 durch das Hohlzahnrad hindurch erstreckt.

Der Anschlag 44a ist am Innenumfang 44b des zweiten Rotationsübertragungselements 44 angeordnet, wobei das Begrenzungselement 41 und das Stellglied 42 radial innerhalb eines von dem Innenumfang 44b des zweiten Rotationsübertragungselements 44 umschriebenen Kreises angeordnet sind.

Wie eingangs erwähnt, könnte gemäß einer in den Figuren nicht dargestellten Variante alternativ der Anschlag 44a an einem Außenumfang des zweiten Rotationsübertragungselements 44 angeordnet sein, wobei das Begrenzungselement 41 und das Stellglied 42 außerhalb des von dem Innenumfang 44b des zweiten Rotationsübertragungselements 44 umschriebenen Kreises angeordnet sind.

### Bezugszeichenliste

- 1: Lenkeinrichtung
- 2: Rad
- 3: Rad
- 4: Spurstange
- 4a: Lenkhebel
- 5: Spurstange
- 5a: Lenkhebel
- 10: Lenker
- 20: Wandlereinrichtung
- 20a: Eingang
- 20b: Ausgang
- 20c: Ausgang
- 30: Verbindungsvorrichtung
- 31: Lenksäule
- 32: Lenkwelle
- 40: Begrenzungsmittel
- 41: Begrenzungselement
- 42: Stellglied
- 43: erstes Rotationsübertragungselement
- 44: zweites Rotationsübertragungselement
- 44a: Anschlag
- 44b: Innenumfang
- L1: Längsachse

## Patentansprüche

1. Lenkeinrichtung (1) für ein mit Rädern (2, 3) versehenes Fahrzeug, aufweisend:
- einen Lenker (10) zum Erzeugen einer einen bestimmten Bewegungsverlauf und ein bestimmtes Betätigungsausmaß aufweisenden Lenkbetätigung,
- eine Wandlereinrichtung (20), die eingerichtet ist, die über einen Eingang (20a) dieser zugeführte Lenkbetätigung zu wandeln, so dass die Lenkbetätigung in gewandelter Form an einem mit den Rädern (2, 3) in Lenkantriebsverbindung zu bringenden Ausgang (20b, 20c) der Wandlereinrichtung (20) abgreifbar ist,
- eine Verbindungsvorrichtung (30), die den Lenker (10) mit dem Eingang (20a) der Wandlereinrichtung (20) lenkantriebsverbindet, zum Überführen der Lenkbetätigung in die Wandlereinrichtung (20), und
- Begrenzungsmittel (40), die eingerichtet sind, das Betätigungsausmaß selektiv entweder auf ein erstes Maximalbetätigungsausmaß freizugeben oder auf ein gegenüber dem ersten Maximalbetätigungsausmaß reduziertes zweites Maximalbetätigungsausmaß zu begrenzen,
**dadurch gekennzeichnet, dass** die Begrenzungsmittel (40) an der Verbindungsvorrichtung (30) angeordnet sind.

2. Lenkeinrichtung (1) nach Anspruch 1, **dadurch gekennzeichnet, dass** die Begrenzungsmittel (40) ein Begrenzungselement (41) aufweisen, das selektiv entweder in eine Freigabeposition, in der die Begrenzungsmittel (40) das erste Maximalbetätigungsausmaß realisieren, oder in eine Begrenzungsposition stellbar ist, in der die Begrenzungsmittel das zweite Maximalbetätigungsausmaß realisieren.

3. Lenkeinrichtung (1) nach Anspruch 2, **dadurch gekennzeichnet, dass** die Begrenzungsmittel (40) ein Stellglied (42) aufweisen, das mit dem Begrenzungselement (41) antriebsverbunden ist, so dass durch Ansteuern des Stellgliedes (42) das Begrenzungselement (41) selektiv zwischen der Freigabeposition und der Begrenzungsposition verfahrbar ist.

4. Lenkeinrichtung (1) nach Anspruch 2 oder 3, **dadurch gekennzeichnet, dass** der Lenker (10) eingerichtet ist, die Lenkbetätigung mit einem rotativen Bewegungsverlauf zu erzeugen, wobei das Begrenzungselement (41) eingerichtet ist, eine durch die Lenkbetätigung erzeugte Rotationsbewegung in der Freigabeposition freizugeben und in der Begrenzungsposition zu begrenzen.

5. Lenkeinrichtung (1) nach Anspruch 4, **dadurch gekennzeichnet, dass** eine weitere Wandlereinrichtung vorgesehen ist, die in die Begrenzungsmittel (40) integriert ist und die eingerichtet ist, das zweite Maximalbetätigungsausmaß in weniger als 360 Grad Rotation umzusetzen.

6. Lenkeinrichtung (1) nach einem der Ansprüche 2 bis 5, **dadurch gekennzeichnet, dass** das Begrenzungselement (41) eingerichtet ist, translatorisch zwischen der Freigabeposition und der Begrenzungsposition verfahren zu werden.

7. Lenkeinrichtung (1) nach einem der Ansprüche 2 bis 6, **dadurch gekennzeichnet, dass** die Verbindungsvorrichtung (30) eine Lenksäule (31) mit einer Längsachse (L1) aufweist, wobei das Begrenzungselement (41) eingerichtet ist, parallel zur Längsachse (L1) der Lenksäule (31) zwischen der Freigabeposition und der Begrenzungsposition verfahren zu werden.

8. Lenkeinrichtung (1) nach einem der Ansprüche 2 bis 7, **dadurch gekennzeichnet, dass** die Verbindungsvorrichtung (30) eine Lenkwelle (32) aufweist, die eingerichtet ist, die Lenkbetätigung durch Rotation zu übertragen, wobei die Begrenzungsmittel (40) ein erstes Rotationsübertragungselement (43), das drehfest auf der Lenkwelle (32) angeordnet ist, und ein zweites Rotationsübertragungselement (44) aufweist, das drehbar gelagert und abgestützt ist und das mit dem ersten Rotationsübertragungselement (43) in Drehantriebsverbindung steht, wobei die beiden Rotationsübertragungselemente (43, 44) ein Rotationsübersetzungsverhältnis realisieren, so dass das zweite Maximalbetätigungsausmaß in weniger als 360 Grad Rotation des zweiten Rotationsübertragungselements (44) umgesetzt wird.

9. Lenkeinrichtung 1 nach Anspruch 8, **dadurch gekennzeichnet, dass** das zweite Rotationsübertragungselement (44) einen Anschlag (44a) aufweist, der so angeordnet ist, dass die Rotation des zweiten Rotationsübertragungselements (44) durch das Begrenzungselement (41) in dessen Begrenzungsposition auf weniger als 360 Grad begrenzt ist und in dessen Freigabeposition freigegeben ist.

10. Lenkeinrichtung (1) nach Anspruch 8 oder 9, **dadurch gekennzeichnet, dass** das erste Rotationsübertragungselement (43) als Zahnrad mit außenumfänglich der Lenkwelle (32) angeordneter Zahnung ausgebildet ist, wobei das zweite Rotationsübertragungselement (44) als Hohlzahnrad mit an einem Innenumfang (44b) dessen angeordneter Zahnung ausgebildet ist und mit dem ersten Rotationsübertragungselement (43) in Zahneingriff steht, wobei sich die Lenkwelle (32) durch das zweite Rotationsübertragungselement (44) hindurch erstreckt.

11. Lenkeinrichtung (1) nach Anspruch 10, **dadurch gekennzeichnet, dass** der Anschlag (44a) am Innenumfang (44b) des zweiten Rotationsübertragungselements (44) angeordnet ist, wobei das Begrenzungselement (41) radial innerhalb eines von dem Innenumfang (44b) des zweiten Rotationsübertragungselements (44) umschriebenen Kreises angeordnet ist.
